Europäisches Patentamt

European Patent Office

Office européen des brevets

(11) Veröffentlichungsnummer: **0 099 052**
**A2**

(12) **EUROPÄISCHE PATENTANMELDUNG**

(21) Anmeldenummer: **83106572.7**

(22) Anmeldetag: **05.07.83**

(51) Int. Cl.³: **C 05 F 3/04**

(30) Priorität: **07.07.82 DE 3225454**

(43) Veröffentlichungstag der Anmeldung:
**25.01.84 Patentblatt 84/4**

(84) Benannte Vertragsstaaten:
**AT BE CH DE FR GB IT LI LU NL SE**

(71) Anmelder: **SÜD-CHEMIE AG**
**Lenbachplatz 6**
**D-8000 München 2(DE)**

(72) Erfinder: **von Raven, Axel, Dr. Dipl.-Chem.**
**Am Erdäpfelgarten 4**
**D-8031 Gilching(DE)**

(72) Erfinder: **Buckl, Hans, Dr. Dipl.-Chem.**
**Eberhardsweg 2**
**D-8050 Freising-Tüntenhausen(DE)**

(72) Erfinder: **Kröner, Ulrich, Dipl.-Landw.**
**Jäger Strasse 35**
**D-7980 Ravensburg 19(DE)**

(74) Vertreter: **Reitzner, Bruno, Dr. et al,**
**Patentanwälte Dipl.-Ing. R. Splanemann Dr. B. Reitzner**
**Tal 13**
**D-8000 München 2(DE)**

(54) Verfahren zur Aufbereitung von fäkalen Abfällen.

(57) Verfahren zur Aufbereitung von fäkalen Abfällen durch Behandlung mit Tonmineralien, das dadurch gekennzeichnet ist, daß man (a) mit fäkalienspezifischen anaeroben und aeroben Mikroorganismen und mit das Wachstum dieser Mikroorganismen fördernden Pflanzenpräpareten sowie mit Kalk angereicherten smektitischen Ton auf die fäkalen Abfälle einwirken läßt und (b) den so behandelten fäkalen Abfällen kurz vor dem Ausbringen ein saures Phosphat zusetzt.

EP 0 099 052 A2

Die Erfindung betrifft ein Verfahren zur Aufbereitung von fäkalen Abfällen.

Unter fäkalen Abfällen versteht man erfindungsgemäß Fest- und Flüssigmist jeder Art, z.B. Kot-Harn-Gemische mit und ohne Einstreu, wie sie heute bei der intensiven Nutztierhaltung anfallen. Derartige fäkale Abfälle sind meist sehr inhomogen, da sich oft starke Sinkschichten oder aber auch feste Schwimmdecken bilden, wodurch der Transport und die Ausbringung auf landwirtschaftlich genutzte Flächen, die wegen der darin enthaltenen Nährstoffe an sich sehr erwünscht ist, zu weiteren Schwierigkeiten führt. Fäkale Abfälle belasten die Umwelt einmal durch einen starken, üblen und langanhaltenden Geruch. Ferner entwickelt sich im Zustand fäkaler Fäulnis, wie sie bei der Lagerung üblicherweise eintritt, eine große Anzahl stark wurzeltoxischer Stoffe in beträchtlichen Mengen, deren genaue Zusammensetzung und Wechselwirkungen noch nicht im einzelnen bekannt sind. Es handelt sich bei diesen Abbauprodukten wahrscheinlich um phenolische Verbindungen (aus Blut und Galle), Ligninbestandteile, Zersetzungsprodukte von Eiweißstoffen (Aminosäuren und Amine) sowie um organische Säuren (z.B. Buttersäure, Propionsäure). Eine stark wurzeltoxische Substanz ist wahrscheinlich auch Ammoniumcarbonat, das bei der Zersetzung von Harnstoff entsteht.

Die durch diese Substanzen bedingte Hemmung und Schädigung des Wurzelwachstums setzt das Nährstoffaneignungsvermögen der gedüngten Pflanzenbestände so stark herab, daß Fäkalien im allgemeinen im Landbau als unberechenbare und unzuverlässige Düngemittel gelten, deren Wirkung schwer kalkulierbar ist, da sie sehr stark von Temperatur, Feuchtigkeit, Bodenzustand usw. abhängig ist.

Ferner können fäkale Abfälle besonders im flüssigen Zustand nur mit großen Nachteilen auf Grünflächen aufgebracht werden, einmal, weil die grünen Pflanzenteile und das Wurzelwerk flachwurzelnder Pflanzen geschädigt werden und zum anderen, weil Weidetiere oder Grünfutter aufnehmende Tiere das so gedüngte Futter verweigern.

Deshalb werden fäkale Abfälle im allgemeinen nicht während der Vegetationsperiode ausgebracht, sondern hauptsächlich nach Beendigung der Vegetationsperiode im Herbst oder im Winter. Diese Art der Ausbringung hat jedoch den Nachteil, daß eine unkontrollierbare Nitrifikation des Ammoniakstickstoffs auftritt, da der gebildete Nitratstickstoff außerhalb der Vegetationsperiode nicht durch die Pflanzen aufgenommen werden kann und durch den Regen oder bei der Schneeschmelze ins Grundwasser gelangt. So stellt heute die Herbst- und Winterausbringung der fäkalen Abfälle über große landwirtschaftliche Flächen eine der Hauptursachen für die Grundwasserverschmutzung mit Nitrat und organischen Bestandteilen dar. Weiterhin wird Kali ausgewaschen und Phosphat im Boden als Tricalciumphosphat festgelegt.

Schließlich enthalten die unbehandelten fäkalen Abfälle Schleimstoffe, die die feinen Poren des Bodens verstopfen, wodurch dessen Aufnahmefähigkeit beeinträchtigt wird. Die Fäkalien können deshalb bei intensiver Düngung in das Oberflächenwasser gelangen und dieses, nicht zuletzt durch pathogene Keime, verschmutzen.

Man hat bereits versucht, die Geruchsbelästigung durch Zusatz von Substanzen zu beseitigen, die zu einer Abtötung der Mikroorganismen führen, die für die Geruchsentwicklung verantwortlich sind. Außerdem sind Substanzen bekannt, die den Geruch der fäkalen Abfälle vorübergehend überdecken können.

Außerdem sind Substanzen bekannt, die die Aufgabe haben, den Ammoniakstickstoff in den fäkalen Abfällen zu konservieren, d.h. dessen Nitrifikation zu hemmen, um auf diese Weise Auswaschungen außerhalb der Vegetationsperiode herabzusetzen. Eine derartige Substanz ist z.B. Dicyandiamid.

Ferner sind Kompostierungszusätze, wie Tone, Urgesteinsmehle, Kalke, Gemische aus Ton und Mineralölen, Eisensulfat usw. bekannt. Die Substanzen werden den Fäkalien mit dem Ziel zugesetzt, deren Umsetzung im Sinne einer Kompostierung zu fördern.

Mit Hilfe dieser verschiedenartigen Zusätze können zwar einzelne Probleme gelöst oder gemildert werden. Eine Lösung aller Probleme ist aber nicht möglich.

So bringen die Substanzen zur Geruchsdämpfung zwar eine Entlastung der Umwelt, belasten aber die ohnehin aufwendige Behandlung und Ausbringung der Fäkalien mit zusätzlichen Kosten, ohne daß deren Düngewert verbessert wird. Der Zusatz von Dicyandiamid verhindert eine vorzeitige Nitrifikation und somit eine leichtere Auswaschung außerhalb der Vegetationsperiode; das Problem der extremen Wurzeltoxizität konnte aber dadurch bis heute nicht beseitigt werden. Es steht zwar dem Pflanzenbestand durch diese Maßnahme zu gegebener Zeit ein größeres Stickstoffreservoir im Boden zur Verfügung; die notwendige Anregung des Wurzelwachstums zur besseren Ausschöpfung des Bodenstickstoffvorrats bleibt jedoch aus, da die so behandelten fäkalen Abfälle die stark wurzelschädigende Wirkung behalten.

Ferner führen die bekannten Kompostierungszusätze zwar zu einer gewissen Geruchsdämpfung sowie zu einer geringfügigen Verbesserung des Wachstums; sie zeigen aber im Prinzip nicht die gewünschte Wirkung, da sie jeweils immer nur einen Bereich der möglichen Schadstoffe adsorbieren, einen weiteren großen Bereich aber unberücksichtigt lassen.

Darauf ist es zurückzuführen, daß bis heute in der landwirtschaftlichen Praxis kein brauchbares Aufbereitungsverfahren bekannt ist, das in der Lage wäre, fäkale Abfälle so aufzubereiten und zu entgiften, daß die darin enthaltenen Nährstoffe bei der landwirtschaftlichen Produktion voll genutzt werden können.

Der Erfindung liegt die Aufgabe zugrunde, ein Verfahren zur Aufbereitung von fäkalen Abfällen zur Verfügung zu stellen, mit dessen Hilfe die vorstehend beschriebenen Probleme gelöst bzw. weitgehend gemildert werden können. Insbesondere sollen mit dem erfindungsgemäßen Verfahren die fäkalen Abfälle so weit aufbereitet und entgiftet werden, daß die darin enthaltenen Nährstoffe in optimaler Weise von den Pflanzen genutzt werden können.

Gegenstand der Erfindung ist ein Verfahren zur Aufbereitung von fäkalen Abfällen durch Behandlung mit Tonmineralien, das dadurch gekennzeichnet ist, daß man (a) mit fäkalienspezifischen anaeroben und aeroben Mikroorganismen und mit das Wachstum dieser Mikroorganismen fördernden Pflanzenpräparaten sowie mit Kalk angereicherten smektitischen Ton auf die fäkalen Abfälle einwirken läßt und (b) den so behandelten fäkalen Abfällen kurz vor dem Ausbringen ein saures Phosphat zusetzt.

Mit Hilfe des erfindungsgemäßen Verfahrens werden die fäkalen Abfälle überraschenderweise so weit aufbereitet, daß sie ihre Wurzeltoxizität weitgehend verlieren und die darin enthaltenen Nährstoffe optimal genutzt werden können. Weiterhin werden unangenehme Gerüche ausgeschaltet. Bei verflüssigten Fäkalien wird die für das Ausbringen erforderliche Homogenität und Fließfähigkeit verbessert, auch wenn diese Abfälle noch feste Bestandteile enthalten.

Vorzugsweise setzt man den angereicherten smektitischen Ton in Mengen von etwa 0,1 bis 20 kg/m³, vorzugsweise von 0,5 bis 10 kg/m³ den fäkalen Abfällen zu.

Der mit den fäkalienspezifischen anaeroben und aeroben Mikroorganismen und mit das Wachstum dieser Mikroorganismen fördernden Pflanzenpräparaten sowie mit Kalk angereicherte smektitische Ton hat zweckmäßig eine verhältnismäßig hohe spezifische Oberfläche, um den Mikroorganismen einen großflächigen Nährboden zu geben, so daß eine sehr hohe Konzentration an Mikroorganismen je Flächeneinheit erhalten wird. Vorzugsweise hat der smektitische Ton eine spezifische Oberfläche von etwa 400 bis 800 m²/g. Die spezifische Oberfläche wird nach der Glykolmethode wie folgt bestimmt: Man tränkt eine Tonprobe mit Äthylenglykol und destilliert das Äthylenglykol im Hochvakuum ab, wobei man entweder den Druckverlauf im System oder den Gewichtsverlust der Probe als Funktion der Zeit aufzeichnet. Wenn die Kurve nach einiger Zeit ein Plateau erreicht hat, liegt eine monomolekulare Äthylenglykolschicht auf der Probe vor. Man bestimmt das Gewicht der Probe sowie die Gewichtsdifferenz zur ursprünglichen, d.h. noch nicht mit Äthylenglykol getränkten Probe. Über den Platzbedarf eines Äthylenglykolmoleküls läßt sich dann die Oberfläche der Probe errechnen. Die Methode ist im einzelnen bei Dyal,R.S.u.Hendricks, S.B.:Total Surface of Clays in Polar Liquids as a Characteristic Index. Soil Science 69,421-432(1950) beschrieben.

Zu den smektitischen Tonmineralen gehören die eigentlichen Smektite sowie ganz allgemein die Mineralien der Montmorillonit-Beidellit-Reihe. Diese Mineralien zeichnen sich durch ein hohes Quellvermögen in Wasser sowie durch ein hohes Kationenaustauschvermögen aus. Erfindungsgemäß wird als smektitischer Ton vorzugsweise ein montmorillonithaltiger Ton, insbesondere Bentonit, verwendet.

Die Funktion der smektitischen Tone als Trägersubstanzen für die Mikroorganismen kann dadurch verbessert werden, daß man einem mit für das Wachstum der Mikroorganismen erforderlichen

0099052

- 6 -

Spurenelementen angereicherten smektitischen Ton verwendet. Geeignete Spurenelemente sind beispielsweise Eisen, Bor, Mangan, Kupfer usw. Diese Spurenelemente können in Form ihrer Salze auf die smektitischen Tone aufgebracht werden. Infolge des guten Kationenaustauschvermögens dieser Tone haften die Spurenelemente verhältnismäßig rasch auf dem Ton und können durch flüssige fäkale Abfälle nicht leicht ausgewaschen werden, wodurch die Mikroorganismen über einen längeren Zeitraum mit den erforderlichen Spurenelementen versorgt werden. Die Art der verwendeten Spurenelemente hängt von dem Bedarf der jeweils verwendeten Mikroorganismen ab.

Besonders geeignet haben sich smektitische Tone erwiesen, die zusätzlich mit amorphem Kalk und gegebenenfalls mit Phosphat angereichert sind.

Die fäkalienspezifischen Mikroorganismen sind anaerob und aerob. Erfindungsgemäß wird der smektitische Ton mit Mikroorganismen der Gattungen Sporenbildner, coryneforme Stäbchen, Mikrokokken und/oder Streptokokken angereichert. Die Anreicherung des Tons mit den Mikroorganismen kann auf einfache Weise dadurch erfolgen, daß die Mikroorganismen entweder in Mischkultur oder auf einem spezifischen Nährboden mit weiteren Nährsubstanzen, die für das Wachstum der Mikroorganismen benötigt werden, mit dem Ton vermischt werden.

Neben den Mikroorganismen enthält das erfindungsgemäß verwendete smektitische Tonmineral auch das Wachstum dieser Mikroorganismen fördernde Pflanzenpräparate. Diese können als Trockenpräparate oder als trockene oder flüssige Extrakte zugesetzt werden. Die Pflanzenpräparate können aus den Gesamtpflanzen bzw. aus Teilen von Pflanzen, wie Blättern, Blüten, Stengeln und Rinden, gewonnen werden. Besonders geeignet sind Trockenpräparate bzw. trockene oder flüssige Extrakte von Heilpflanzen bzw. von Teilen dieser Pflanzen. Vorzugsweise verwendet man als Heilpflanzen bzw. deren Teile Brennesseln, Löwenzahn, Baldrian, Schafgarbe, Kamille bzw.

Eichenrinde.

Der mit den Mikroorganismen und den Pflanzenpräparaten angereicherte smektitische Ton bewirkt eine Geruchsdämpfung durch die Zersetzung der Geruchssubstanzen mit Hilfe der Mikroorganismen sowie durch Adsorption der Geruchssubstanzen an der Oberfläche bzw. in den Poren des smektitischen Tons. Ferner bauen die Mikroorganismen die in den fäkalen Abfällen enthaltenen hochmolekularen Substanzen (z.B. Cellulose, Schleimstoffe und Lignin) ab. Die bei diesem Abbau entstehenden niedrigmolekularen Abbauprodukte (z.B. Phenole, Säuren, Ammoniak) werden wahrscheinlich intermediär an der Oberfläche bzw. in den Poren des smektitischen Tons adsorbiert, so daß die Tätigkeit der Mikroorganismen durch diese Substanzen nicht beeinträchtigt und der weitere Abbau nicht gestört wird. Beim Ausbringen der so behandelten fäkalen Abfälle beobachtet man keine Wurzeltoxizität mehr. Ferner wird durch den Abbau der hochmolekularen organischen Substanzen, die sich bei flüssigen fäkalen Abfällen zum großen Teil auch in der Schwimmschicht und in der Sinkschicht befinden, die Fließfähigkeit der fäkalen Abfälle erhöht. Durch den Zusatz des smektitischen Tons wird ferner eine Thixotropierung der flüssigen fäkalen Abfälle erreicht, wodurch die Separierung durch Schwebestoffe verhindert und auf diese Weise die Pumpfähigkeit verbessert wird.

Die Behandlung der fäkalen Abfälle mit dem angereicherten smektitischen Ton wird vorzugsweise über einen Zeitraum von 2 Wochen bis 6 Monaten, insbesondere über einen Zeitraum von etwa 1 bis 3 Monaten, durchgeführt, wobei dieser Zeitraum von den angewendeten Temperaturen abhängt. Diese liegen im allgemeinen im Bereich von etwa 5 bis 30°C.

Der bei der Aufbereitung gebildete Ammoniak liegt wahrscheinlich überwiegend in Form von Ammoniumcarbonat vor, da bei der Zersetzung fäkaler Abfälle auch Kohlendioxid gebildet wird. Ein Teil der stark wurzeltoxischen Wirkung wird auf das Ammoniumcarbonat zurückgeführt. Überraschenderweise wurde gefunden, daß bei Zusatz von saurem Phosphat kurz vor dem Aufbringen die Wurzeltoxizität nochmals stark verringert werden kann. Dies ist wahrscheinlich dadurch bedingt, daß das saure Phosphat keine Gelegenheit mehr hat, in einer Konkurrenzreaktion bevorzugt mit den in den Fäkalien enthaltenen Calcium- oder Magnesiumionen zu reagieren. Es bringt keinen Vorteil, das saure Phosphat von Anfang an zusammen mit dem angereicherten smektitischen Ton den unbehandelten fäkalen Abfällen zuzusetzen, da die Ammoniakkonzentration wahrscheinlich zunächst noch nicht ausreichend ist, um in Konkurrenz mit den Calcium- und Magnesiumionen mit dem sauren Phosphat zu reagieren. Auch wenn das saure Phosphat in einem späteren Zeitpunkt zugesetzt wird, der eine längere Zeitspanne vor dem Ausbringen liegt, ist dies ungünstig, weil die bereits gebundenen Ammoniumionen durch eine Austauschreaktion mit den Calcium- und Magnesiumionen wieder in Form von Ammoniak freigesetzt werden können.und das Phosphat als unlösliches Calcium- bzw. Magnesium-Triphosphat ausfällt und damit für eine Reaktion mit dem nachgebildeten Ammoniumcarbonat nicht mehr zur Verfügung steht.

Das saure Phosphat wird zweckmäßig in einer Menge von etwa 0,1 bis 20 kg/m², vorzugsweise von 1 bis 10 kg/m² zugesetzt. Vorzugsweise verwendet man als saures Phosphat ein mit Mineralsäuren, wie Schwefelsäure und/oder Phosphorsäure, aufgeschlossenes Calciumphosphat, das auch als Superphosphat bezeichnet wird. Dieses enthält gewöhnlich noch etwas überschüssige Säure, durch die ein Teil des Ammoniaks in den vorbehandelten fäkalen Abfällen in Form der entsprechenden Ammoniumsalze gebunden wird. Wird zum Aufschluß des neutralen Calciumphosphats Schwefelsäure verwendet, so bildet sich neben dem Superphosphat auch Calciumsulfat in Form von Gips.

Dieser Gips kann in Berührung mit Wasser zu einer Klumpenbildung führen. Erfindungsgemäß wird deshalb vorgeschlagen, das Superphosphat mit einem Zusatz an smektitischem Ton zu verwenden, wobei als smektitischer Ton vorzugsweise ein solcher verwendet wird, wie er auch in der ersten Stufe des Verfahrens zur Anwendung kommt. Vorzugsweise wird das Superphosphat mit dem smektitischen Ton fein vermahlen. Auf diese Weise wird der Gips in den verflüssigten fäkalen Abfällen in Suspension gehalten.

Der Zusatz an smektitischem Ton ist auch bei anderen sauren Phosphaten günstig, da er außer einer zusätzlichen Geruchsdämpfung und Adsorption von wurzeltoxischen Substanzen eine stärkere Ammoniakbindung bewirkt.

Vorzugsweise wird das saure Phosphat frühestens eine Woche vor dem Ausbringen den vorbehandelten fäkalen Abfällen zugesetzt.

Das erfindungsgemäße Verfahren ist durch die nachstehenden Beispiele erläutert:

## Beispiel 1

150 m³ Rindergülle wurden in einem runden Hochbehälter mit 30 kg eines Bentonitpräparats versetzt, das wie folgt hergestellt worden war:

1 Gewichtsteil Calciumbentonit aus Moosburg/Bayern (spezifische Oberfläche 630 m²/g) wurde mit 0,01 Gewichtsteilen eines Präparats aus güllespezifischen Mikroorganismen (hauptsächlich aus den Gattungen Sporenbildner, coryneforme Stäbchen und Mikrokokken)die auf Rinderdung als Nährboden gezüchtet worden waren, sowie 0,01 Gewichtsteilen eines pulverförmigen Gemischs aus getrockneten Brennesseln, Schafgarbe, Löwenzahn, Baldrian und Kamille und mit 0,01 Gewichtsteilen eines Gemisches aus Algenkalk und Tricalciumphosphat vermischt. Der Bentonit hatte bereits einen verhältnismäßig hohen Gehalt an Spurenelementen (B, Mn, Co, Cu, Mo, Ni, Zn), so daß keine weiteren Spurenelemente zur Förderung des Wachstums der Mikroorganismen zugesetzt werden mußten.

Nachdem das Bentonitpräparat drei Monate auf die Rindergülle eingewirkt hatte, war diese so weit aufbereitet, daß die noch vorhandene Schwimmdecke durch Rühren mit dem Strahl einer Güllepumpe nach 10 Minuten beseitigt werden konnte, ohne daß sie sich nach Beendigung des Rührens zurückbildete.

Im Gegensatz dazu mußte bei unbehandelter Rindergülle 60 Minuten gerührt werden, bis die Schwimmdecke temporär beseitigt war; diese bildete sich nach Beendigung des Rührens wieder zurück.

Die mit dem Bentonitpräparat vorbehandelte Gülle wurde mit 750 kg eines sauren Phosphats verrührt, das durch Vermahlen von 90 Gewichtsteilen eines mit Schwefelsäure aufgeschlossenen Calciumphosphats mit einem Gehalt an freier Säure von 16 Gewichtsprozent (Superphosphat) mit 10 Teilen Bentonit erhalten worden war. Das Produkt war ein feines weißes Pulver, das in Wasser ohne Klumpenbildung leicht dispergierbar war.

Das Einrühren des Phosphatpräparats erfolgte beim Füllen des Güllewagens unmittelbar vor dem Ausbringen. Es wurde hierbei nochmals eine Geruchsverminderung festgestellt.

Die so behandelte Gülle wurde in einer Menge von 40m³/ha auf Grünland ausgebracht (Versuch A). Zum Vergleich wurde dieselbe Menge der nur mit dem Bentonitpräparat behandelten Gülle (Versuch B) bzw. der unbehandelten, drei Monate alten Gülle (Versuch C) auf Grünland ausgebracht.

Bei der Ausbringung der unbehandelten Gülle wurde eine Verschmutzung und eine Verklebung der Gräser durch die vorhandenen Güllefeststoffe beobachtet. Die Gülle sickerte nur langsam und machte sich durch einen unangenehmen Geruch bemerkbar. Die nur mit dem Bentonitpräparat behandelte Gülle (Versuch B) ergab eine geringere Verschmutzung der Gräser und drang leichter in den Boden ein. Die Geruchsbelästigung war geringer.

Die mit dem Bentonitpräparat und dem Phosphatpräparat behandelte Gülle (Versuch A) entwickelte einen schwächeren Geruch als die Probe B. Bezüglich der Verschmutzung der Gräser und des Eindringens in den Boden verhielt sich die Probe A etwa wie die Probe B.

Nach 4 Wochen wurden die Grünflächen gemäht und folgende Erträge festgestellt:

| Versuch A | | Versuch B | | Versuch C | |
|---|---|---|---|---|---|
| Hektarertrag (dt) | | Hektarertrag (dt) | | Hektarertrag (dt) | |
| (frisch) | (getrocknet) | (frisch) | (getrocknet) | (frisch) | (getrocknet) |
| 272,2 | 40,6 | 247.7 | 34,9 | 229,0 | 28,5 |

Ferner wurde die Durchwurzelung der oberen Bodenschicht (10cm) qualitativ dadurch bestimmt, daß auf jedem Versuchsfeld ein quadratisches Rasenstück mit einer Seitenlänge von 20 cm herausgestochen wurde. Beim Versuch C zerfiel das Rasenstück bereits beim Herausstechen. Bei Versuch B blieb das Rasenstück beim Herausstechen zwar noch ganz, zerfiel aber, wenn man es aus einer Höhe von 1 m auf den Boden fallen ließ. Das Rasenstück von Versuch A blieb bei dieser Behandlung intakt.

## Beispiel 2

Auf 1 Liter Schweinegülle wurden 2 g des Bentonitpräparats von Beispiel 1 über einen Zeitraum von einem Monat einwirken gelassen. In die so behandelte Gülle wurden folgende Phosphatpräparate (jeweils 5 g) eingerührt:

Versuch A 1: 90 Gewichtsteile Superphosphat (mit $H_2SO_4$ aufge-schlossen), mit 10 Gewichtsteilen Bentonit fein vermahlen;

Versuch A 2: 90 Gewichtsteile Doppelsuperphosphat (mit $H_3PO_4$ aufgeschlossen), mit 10 Gewichtsteilen Bentonit fein vermahlen;

Versuch A 3: 90 Gewichtsteile Diammoniumhydrogenphosphat mit 10 Gewichtsteilen Bentonit vermischt.

Etwa 15 Minuten nach dem Zusatz der Phosphatpräparete wurden die Gülleproben im Verhältnis 1 : 29 mit Wasser verdünnt und auf Petrischalen verteilt (Volumen 10 ml). Die Flüssigkeitsoberflächen wurden mit weichen Filterpapieren bedeckt. Auf die Papieroberflächen wurden jeweils 10 Kressesamen-körner gestreut. Nach vier Tagen wurde die Wurzelbildung bestimmt. Dieser Versuch gibt einen Anhaltspunkt für die Wurzeltoxizität der erfindungsgemäß aufbereiteten Gülle.

Zum Vergleich wurden Kressesamen auf entsprechend verdünnten Gülleproben keimen gelassen, wobei in einem Fall nur mit dem Bentonitpräparat behandelte Gülle (Versuch B) und im anderen Fall völlig unbehandelte, drei Monate alte Gülle (Versuch C) verwendet wurde.

Es wurden folgende Ergebnisse erhalten:

|  | Versuch A1 | Versuch A2 | Versuch A3 |
|---|---|---|---|
| Anzahl der gekeimten Samen | 9 | 9 | 8 |
| durchschnittliche Länge der Hauptwurzel (cm) | $5,0\pm0,3$ | $5,5\pm0,3$ | $4,9\pm0,3$ |
| Ausbildung von feinen Wurzelhaaren | stark | stark | stark |

|  | Versuch B | Versuch C |
|---|---|---|
| Anzahl der gekeimten Samen | 6 | 5 |
| durchschnittliche Länge der Hauptwurzel (cm) | $1,0\pm0,2$ | $0,5\pm0,2$ |
| Ausbildung von feinen Wurzelhaaren | geringfügig | keine |

Diese Ergebnisse zeigen, daß die erfindungsgemäß behandelte Gülle (Versuche A1 bis A3) praktisch keine Wurzeltoxizität besitzt, da die hochempfindlichen Wurzelhaare sehr dicht auftreten. Die nur mit dem Bentonitpräparat behandelte Gülle (Versuch B) bewirkt zwar noch ein gewisses Wachstum der Hauptwurzel; ihre Wurzeltoxizität ist jedoch so groß, daß praktisch keine Wurzelhaare mehr gebildet werden. Die Wurzeltoxizität der unbehandelten Gülle (Versuch C) ist so hoch, daß sogar das Wachstum der Hauptwurzel und die Keimfähigkeit stark beeinträchtigt werden.

0099052

Süd-Chemie AG

Lenbachplatz 6

8000    München    2                    4465-X-12.224


Verfahren zur Aufbereitung
von fäkalen Abfällen


PATENTANSPRÜCHE

1. Verfahren zur Aufbereitung von fäkalen Abfällen durch Behandlung mit Tonmineralien, dadurch gekennzeichnet, daß man (a) mit fäkalienspezifischen anaeroben und aeroben Mikroorganismen und mit das Wachstum dieser Mikroorganismen fördernden Pflanzenpräparaten sowie mit Kalk angereicherten smektitischen Ton auf die fäkalen Abfälle einwirken läßt und (b) den so behandelten fäkalen Abfällen kurz vor dem Ausbringen ein saures Phosphat zusetzt.

2. Verfahren nach Anspruch 1, dadurch gekennzeichnet, daß man den angereicherten smektitischen Ton in Mengen von etwa 0,1 bis 20 kg/m$^3$, vorzugsweise von 0,5 bis 10 kg/m$^3$ den fäkalen Abfällen zusetzt.

3. Verfahren nach Anspruch 1 oder 2, dadurch gekennzeichnet, daß man einen smektitischen Ton mit einer spezifischen Oberfläche (nach der Glykolmethode bestimmt) von etwa 400 bis etwa 800 m$^2$/g verwendet.

4. Verfahren nach einem der Ansprüche 1 bis 3, dadurch gekennzeichnet, daß man als smektitischen Ton einen montmorilloniathaltigen Ton, insbesondere Bentonit, verwendet.

5. Verfahren nach einem der Ansprüche 1 bis 4, dadurch gekennzeichnet, daß man einen mit für das Wachstum der Mikroorganismen erforderlichen Spurenelementen angereicherten smektitischen Ton verwendet.

6. Verfahren nach einem der Ansprüche 1 bis 5, dadurch gekennzeichnet, daß man einen mit amorphem Kalk und gegebenenfalls mit Phosphat angereicherten smektitischen Ton verwendet.

7. Verfahren nach einem der Ansprüche 1 bis 6, dadurch gekennzeichnet, daß man den smektitischen Ton mit Mikroorganismen der Gattungen Sporenbildner, coryneforme Stäbchen, Mikrokokken und/oder Streptokokken anreichert.

8. Verfahren nach einem der Ansprüche 1 bis 7, dadurch gekennzeichnet, daß man als Pflanzenpräparat ein Trockenpräparat oder einen trockenen oder flüssigen Extrakt von Heilpflanzen und/oder deren Teilen verwendet.

9. Verfahren nach Anspruch 8, dadurch gekennzeichnet, daß man als Heilpflanzen Brennesseln, Löwenzahn, Baldrian, Schafgarbe, Kamille bzw. deren Teile bzw. Eichenrinde verwendet.

10. Verfahren nach einem der Ansprüche 1 bis 9, dadurch gekennzeichnet, daß man das saure Phosphat (Stufe (b)) von Anspruch 1 in einer Menge von etwa 0,1 bis 20 kg/m$^3$, vorzugsweise von 1 bis 10 kg/m$^3$ zusetzt.

11. Verfahren nach einem der Ansprüche 1 bis 10, dadurch gekennzeichnet, daß man als saures Phosphat ein mit Mineralsäuren aufgeschlossenes Calciumphosphat verwendet.

12. Verfahren nach einem der Ansprüche 1 bis 11, dadurch gekennzeichnet, daß man ein saures Phosphat mit einem Zusatz an smektitischem Ton, insbesondere mit den in den Ansprüchen 3 bis 5 angegebenen Merkmalen, verwendet.

13. Verfahren nach Anspruch 12, dadurch gekennzeichnet, daß man ein mit einem smektitischen Ton fein vermahlenessaures Superphosphat verwendet.

14. Verfahren nach einem der Ansprüche 1 bis 13, dadurch gekennzeichnet, daß man den angereicherten smektitischen Ton (Stufe (a) von Anspruch 1) über einen Zeitraum von 2 Wochen bis 6 Monaten, vorzugsweise über einen Zeitraum von 1 bis 3 Monaten, auf die fäkalen Abfälle einwirken läßt.

15. Verfahren nach einem der Ansprüche 1 bis 14, dadurch gekennzeichnet, daß man das saure Phosphat (Stufe (b) von Anspruch 1) frühestens eine Woche vor dem Ausbringen den behandelten fäkalen Abfällen zusetzt.